# EUROPÄISCHE PATENTSCHRIFT

(11) **EP 3 764 297 B1**
(45) Veröffentlichungstag und Bekanntmachung des Hinweises auf die Patenterteilung: **20.12.2023**
(21) Anmeldenummer: 20179555.6
(22) Anmeldetag: 11.06.2020
(51) Int. Cl.: G06Q 10/06, G06Q 50/30, B60K 35/00, B60K 37/06

(54) **VERFAHREN ZUM BEREITSTELLEN EINER INTERAKTIVEN DARSTELLUNG DES MOMENTANEN BETRIEBSMODUS EINES FAHRZEUGS**
METHOD FOR PROVIDING AN INTERACTIVE REPRESENTATION OF THE CURRENT OPERATING MODE OF A VEHICLE
PROCEDE PERMETTANT DE FOURNIR UNE REPRESENTATION INTERACTIVE DU MODE DE FONCTIONNEMENT ACTUEL D'UN VEHICULE

(30) Priorität: 08.07.2019 DE 102019210024
(43) Veröffentlichungstag der Anmeldung: 13.01.2021
(73) Patentinhaber: VOLKSWAGEN AG, 38440 Wolfsburg (DE)
(72) Erfinder: Auer, Richard, 38442 Wolfsburg (DE); Weiß, Norbert, 38173 Sickte (DE); Neumann, Markus, 38553 Vordorf (DE); Lackmann, Maike, 38518 Gifhorn (DE)

(56) Entgegenhaltungen:
- EP-A1- 2 159 097
- WO-A1-2019/120338
- DE-A1-102018 125 191
- US-A1- 2014 114 513

## Beschreibung

Die Erfindung betrifft ein Verfahren zum Bereitstellen einer interaktiven Darstellung des momentanen Betriebsmodus eines Fahrzeugs mit unterschiedlichen Antriebsenergiequellen auf einer Anzeige- und Bedieneinrichtung, ein Computerprogramm zur Durchführung des Verfahrens sowie ein maschinenlesbares Speichermedium, auf dem das Computerprogram gespeichert ist. Die hier beschriebene interaktive Darstellung erlaubt eine besonders vorteilhafte Möglichkeit zur Einstellung des momentanen Betriebsmodus des Fahrzeugs durch den Benutzer.

In Fahrzeugen mit unterschiedlichen Energiequellen (wie zum Beispiel Fahrzeuge mit Hochvolt-Batterie und fossilem Brennstoff oder Fahrzeugen mit Hochvolt-Batterie und Wasserstoff) kann es eine Aufgabe des Fahrers bzw. Benutzers sein, zu bestimmen wie mit der vorhandenen Energie umzugehen ist. Dieses kann mit einer Betriebsmodusauswahl veranlasst werden. In den bisherigen Varianten ist eine Energiequelle durch Energierückgewinnung sowohl leer- als auch füllbar (in der Regel eine elektrische Batterie) und eine Energiequelle (zumindest im Fahrbetrieb des Fahrzeugs) nur leerbar (in der Regel ein Tank für fossilen Brennstoff oder Wasserstoff).

Somit können sich folgende Möglichkeiten ergeben: Energie nur aus der Energiequelle zu entnehmen, die auch wieder (im Fahrbetrieb) füllbar ist (d.h. aus der Hochvolt-Batterie; dies kann auch als "E-Mode" bezeichnet werden); Energie nur aus der Energiequelle zu entnehmen, die nicht (im Fahrbetrieb) füllbar ist (d.h. fossiler Brennstoff oder Wasserstoff; dies kann auch als sog. "SOC-Hold Mode" bezeichnet werden); Energie aus beiden Energiequellen zu entnehmen, ggf. in irgendeiner Form streckenoptimiert (dies kann auch als sog. "Depleting Mode" bezeichnet werden); Energie aus der (im Fahrbetrieb) nicht füllbaren Quelle entnehmen, um die füllbare aufzufüllen (dies kann auch als sog. "Charge Mode" bezeichnet werden).

Für all diese Modi kann es auch noch relevant sein, ob ein gewisser Ladezustand erreicht wurde oder nicht. Als Beispiel: Der Charge Mode sollte ggf. nach Benutzerwunsch nicht von leer (0% SOC) zu ganz voll (100% SOC) die Hochvolt-Batterie befüllen, sondern nur einen Wunsch-SOC von zum Beispiel 80% erreichen. Im Depleting Mode kann das ähnlich sein: Der Kunde möchte vielleicht bis zum Ziel nicht eine leere Hochvolt-Batterie haben, sondern noch einen Restladezustand erhalten. In bisherigen Konzepten kann der Kunde aus diesen Möglichkeiten auswählen. Dabei gibt es immer Situationen, bei denen der eine Modus besser oder schlechter als die anderen ist.

Die DE 10 2018 125 191 A1 offenbart ein System für ein Fahrzeug, das einen Verbrennungsmotor und einen Elektromotor beinhaltet, die jeweils dazu konfiguriert sind, das Fahrzeug mit Energie zu versorgen. Weiter wird eine Steuerung angegeben, die dazu konfiguriert ist, als Reaktion sowohl darauf, dass eine Fahrtreichweite nur mit Verbrennungsmotor unter einem Schwellenwert liegt als auch darauf, dass ein Fahrmodus rein elektrisch ist, einen Verbrennungsmotor zu betreiben, um eine Batterie zu laden, um Kraftstoff für den Verbrennungsmotor aufzubrauchen und die Fahrtreichweite nur mit Verbrennungsmotor Richtung null zu reduzieren, und als Reaktion darauf, dass die Fahrtreichweite nur mit Verbrennungsmotor null wird, eine Warnung zu generieren. In diesem Zusammenhang wird auch ein Benutzerdisplay zum Verbessern der Genauigkeit der angegebenen Kraftstoffreichweite offenbart, welches eine Eingabe von Bedienelementen einer HMI-Schnittstelle empfangen kann.

Die EP 2 159 097 A1 offenbart Informationsanzeigesysteme und Verfahren zur Anzeige von Hybridfahrzeuginformationen für den Fahrzeugbetreiber. Insbesondere wird ein Verfahren zur Anzeige von Angaben auf einem Fahrzeugdisplay bereitgestellt, das eine aktuelle Kraftstoffeffizienz relativ zur Betätigung der Drosselklappe identifiziert. Die aktuelle Kraftstoffeffizienz und die Drosseldaten können grafisch mit visuellen Indikatoren dargestellt werden, um abzugrenzen, wo das Fahrzeug in einen anderen Betriebsmodus übergeht.

Aus der WO 2019/120338 A1 ist ein Verfahren zur Fahrmodusumschaltung bei einem Hybridfahrzeug bekannt. Eine Steuereinheit ist dabei für die Fahrmodiwahl ausgelegt und ferner mit einer Benutzerschnittstelle kommunikationsverbunden, welche die Wahl des Steuerbetriebs der Fahrmodusumschaltung ermöglicht, wobei unter den Fahrmodi mindestens ein Fahrmodus ist, bei dem der Batterieladezustand aufrechterhalten wird, ein Fahrmodus, bei dem der Batterieladezustand abnimmt, und ein Fahrmodus, bei dem der Batterieladezustand zunimmt. Die Benutzerschnittstelle ermöglicht die Einstellung einer ladezustandsbezogenen Grenzwertvorgabe, bei derer Erreichung die Menge der wählbaren Fahrmodi eingeschränkt wird.

Die US 2014/114513 A1 offenbart ein Verfahren zur Steuerung eines Fahrzeugs, wobei als Reaktion auf eine Eingabe, die einen reinen Elektrobetriebsmodus auswählt, ein Motor deaktiviert wird, so dass das Fahrzeug durch eine elektrische Maschine angetrieben wird. Als Reaktion auf die Erfassung eines vordefinierten Fahrzeugzustands, während der der reine Elektrobetriebsmodus ausgewählt ist, kann der Motor wieder aktiviert werden, so dass das Fahrzeug durch den Motor und/oder eine elektrische Maschine angetrieben wird. Als Reaktion auf das Erkennen des Nichtvorhandenseins des vordefinierten Fahrzeugzustands, während der rein elektrische Betriebsmodus ausgewählt ist, wird der Motor deaktiviert, so dass das Fahrzeug durch die elektrische Maschine angetrieben wird.

Die Komplexität ist verständlicherweise sehr komplex bzw. sehr hoch, so dass im Allgemeinen ein Wunsch-SOC gar nicht einfach einstellbar ist, sondern ggf. nur ein Tendenzverhalten. Bei bisherigen Versuchen den Komplexitätsgrad zu reduzieren ging dies immer auch zu Lasten der Flexibilität. Mit anderen Worten folgt aus einer Reduzierung der Möglichkeiten in der Regel auch eine dementsprechende Reduzierung der Flexibilität.

Hiervon ausgehend ist es Aufgabe der vorliegenden Erfindung, die im Zusammenhang mit dem Stand der Technik geschilderten technischen Probleme zumindest teilweise zu lösen. Es ist insbesondere eine Aufgabe dieser Erfindung die bisherigen Bedienungen zu vereinfachen, aber die Flexibilität für den geneigten Anwender zu erhalten.

Diese Aufgaben werden gelöst mit einem Verfahren gemäß den Merkmalen des unabhängigen Patentanspruchs. Weitere vorteilhafte Ausgestaltungen sind in den abhängig formulierten Patentansprüchen angegeben. Die in den abhängig formulierten Patentansprüchen einzeln aufgeführten Merkmale sind in beliebiger, technologisch sinnvoller Weise miteinander kombinierbar. Darüber hinaus können die in den Patentansprüchen aufgeführten Merkmale durch erläuternde Sachverhalte aus der Beschreibung ergänzt werden, wobei weitere Ausführungsvarianten der Erfindung aufgezeigt werden.

Hierzu trägt ein Verfahren zum Bereitstellen einer interaktiven Darstellung des momentanen Betriebsmodus eines Fahrzeugs mit unterschiedlichen Antriebsenergiequellen auf einer Anzeige- und Bedieneinrichtung bei, wobei folgendes auf der Anzeige- und Bedieneinrichtung gleichzeitig dargestellt wird:
- eine benutzer-selektierbare erste Information über die Aktivierung oder Deaktivierung eines ersten Betriebsmodus, in dem das Fahrzeug mit nur einer ersten der unterschiedlichen Antriebsenergiequellen betrieben werden kann,
- eine benutzer-selektierbare zweite Information über die Aktivierung oder Deaktivierung eines zweiten Betriebsmodus, in dem das Fahrzeug mit mindestens einer ersten und einer zweiten der unterschiedlichen Antriebsenergiequellen betrieben werden kann,
- eine dritte Information über einen Zustand zumindest der ersten der unterschiedlichen Antriebsenergiequellen.

Das (Kraft-)Fahrzeug kann beispielsweise ein Automobil sein. Bei der ersten der unterschiedlichen Antriebsenergiequellen kann es sich um eine solche handeln, die im Fahrbetrieb des Fahrzeugs leerbar und (wieder) füllbar ist. Hierbei ist die erste Antriebsenergiequelle ein Akkumulator des Fahrzeugs zum Speichern elektrischer Energie (allgemein auch als (Hochvolt-)Batterie bezeichnet). Bei der zweiten der unterschiedlichen Antriebsenergiequellen handelt es sich um einen Tank des Fahrzeugs zum Speichern von fossilem Brennstoff oder von Wasserstoff handeln.

Die Darstellung ist interaktiv und erlaubt somit eine vorteilhafte (geführte) Mensch-Maschine-Interaktion. Dabei trägt die gleichzeitige Darstellung der ersten, zweiten und dritten Information auf einer (derselben) Anzeige- und Bedieneinrichtung, von denen zumindest die erste und die zweite Information (und ggf. auch zumindest ein Teil der dritten Information) benutzer-selektierbar sind, dazu bei, den Benutzer (Fahrer) in einer einfachen, aber gleichwohl flexiblen Art und Weise bei der Steuerung des Fahrzeugs, insbesondere der Einstellung des momentanen Betriebsmodus des Fahrzeugs zu unterstützen.

Die hier beschriebene interaktive Darstellung erlaubt eine besonders vorteilhafte (weil einfache, aber gleichwohl flexible) Möglichkeit zur Einstellung des momentanen Betriebsmodus des Fahrzeugs durch den Benutzer. In diesem Zusammenhang kann das Verfahren auch als ein Verfahren zum Einstellen des momentanen Betriebsmodus und/oder der momentanen Betriebsstrategie eines Fahrzeugs über eine interaktive Darstellung des momentanen Betriebsmodus des Fahrzeugs mit unterschiedlichen Antriebsenergiequellen auf einer Anzeige- und Bedieneinrichtung beschrieben werden.

Hierbei erhält der Benutzer insbesondere im Rahmen einer vorteilhaft übersichtlichen Darstellung die Möglichkeit die Betriebsmodi weitestgehend unmittelbar über die Anzeigeelemente der Betriebsmodi (d.h. die Anzeigeelemente, die Aktivierung oder Deaktivierung des jeweiligen Betriebsmodus anzeigen) einzustellen. In vorteilhafter Weise kann der Benutzer gleichzeitig über die dritte Information erkennen, wie sich seine Einstellung auf den Zustand zumindest der ersten der unterschiedlichen Antriebsenergiequellen auswirken kann.

Der erste Betriebsmodus betrifft insbesondere einen Elektro-Modus (kurz: E-Mode). In diesem wird in der Regel folgende erste Betriebsstrategie verfolgt: Das Fahrzeug fährt möglichst rein elektrisch bis die Energie in der Batterie aufgebraucht ist. Erst dann wird automatisch der Hybrid-Modus aktiv.

Der zweite Betriebsmodus betrifft insbesondere einen Hybrid-Modus. In diesem wird in der Regel folgende zweite Betriebsstrategie verfolgt: Das Fahrzeug nutzt intelligent beide Antriebe. Dabei können automatisch Informationen aus dem Navigationssystem zur effizienten Batterienutzung berücksichtigt werden.

Zudem kann ein dritter Betriebsmodus vorgesehen und eingestellt werden. Der dritte Betriebsmodus betrifft eine manuelle Steuerung (ggf. innerhalb des Hybrid-Modus). In dem dritten Betriebsmodus wird in der Regel folgende dritte Betriebsstrategie verfolgt: Die Ladung der zweiten Antriebsenergiequelle (Hochvoltbatterie) kann konstant gehalten oder in mehreren, insbesondere fünf Stufen vorgewählt werden. Dies kann zum Laden während der Fahrt oder Reservieren eines Ladestands führen. Die jeweilig erwartete elektrische Restreichweite kann zusätzlich angezeigt werden.

Grundsätzlich sind drei Varianten denkbar. Nämlich eine erste Variante mit drei Betriebsmodi ("E-MODE", "HYBRID" und "Manuelle Steuerung"), eine zweite Variante mit zwei Betriebsmodi ("E-MODE" und "HYBRID"), wobei in HYBRID der Ladestand konfigurierbar ist und eine dritte Variante mit zwei Modi ("E-MODE" und "HYBRID"), bei der in HYBRID der Ladestand konfigurierbar ist und die manuelle Steuerung aus-/eingeblendet werden kann. Alle drei Varianten erlauben in vorteilhafter Weise eine neue, vereinfachte und flexiblere Betriebsmodusauswahl für Fahrzeuge mit unterschiedlichen Energiequellen.

Die benutzer-selektierbare erste Information und die benutzer-selektierbare zweite Information werden in Form von Schaltflächen dargestellt, die über eine Berührung der Anzeige- und Bedieneinrichtung durch einen Benutzer im Bereich der betreffenden Schaltfläche selektiert werden können. Zugleich können diese Schaltflächen einen (zum Beispiel über eine Farbänderungen und/oder ein Hinzufügen eines Hakens) änderbaren Informationsinhalt wiedergeben, der einen eindeutigen Rückschluss auf den momentan aktiven Betriebsmodus erlaubt. Entsprechende Schaltflächen können allgemein auch als "Soft-Key-Tasten" oder kurz "Softkeys" bezeichnet werden.

Die zwei Schaltflächen für die erste und die zweite Information sind vorzugsweise unmittelbar nebeneinander und/oder auf derselben Höhe angeordnet. Weiterhin bevorzugt sind die zwei Schaltflächen für die erste und die zweite Information oberhalb der dritten Information angeordnet. Die Schaltflächen können darüber hinaus mit einer Beschriftung zur Identifikation des jeweiligen Betriebsmodus (z.B. "E-Mode" unter der ersten Schaltfläche und "HYBRID" unter der zweiten Schaltfläche) versehen sein.

Es wird vorgeschlagen, dass auf eine Selektion der ersten Information durch einen Benutzer hin der erste Betriebsmodus aktiviert wird und die erste Information sich so ändert, dass sie die Aktivierung des ersten Betriebsmodus anzeigt. Dies trägt in vorteilhafter Weise zu einer einfachen und zuverlässigen Mensch-Maschine-Interaktion bei. Die Selektion erfolgt durch ein Berühren der Anzeige- und Bedienvorrichtung im Bereich der ersten Information bzw. im Bereich einer ersten Schaltfläche, welche die erste Information enthält bzw. darstellt. Die erste Schalfläche kann beispielsweise ihren Inhalt, ihre Form und/oder ihre Farbe ändern, um die Aktivierung des ersten Betriebsmodus anzuzeigen. Alternativ oder kumulativ kann der ersten Schalfläche ein zusätzliches graphisches Element, wie beispielsweise ein Haken hinzugefügt werden.

Es wird vorgeschlagen, dass auf eine Selektion der zweiten Information durch einen Benutzer hin der zweite Betriebsmodus aktiviert wird und die zweite Information sich so ändert, dass sie die Aktivierung des zweiten Betriebsmodus anzeigt. Dies trägt ebenfalls in vorteilhafter Weise zu einer einfachen und zuverlässigen Mensch-Maschine-Interaktion bei. Die Selektion erfolgt durch ein Berühren der Anzeige- und Bedienvorrichtung im Bereich der zweiten Information bzw. im Bereich einer zweiten Schaltfläche, welche die zweite Information enthält bzw. darstellt. Die zweite Schalfläche kann beispielsweise ihren Inhalt, ihre Form und/oder ihre Farbe ändern, um die Aktivierung des zweiten Betriebsmodus anzuzeigen. Alternativ oder kumulativ kann der zweiten Schalfläche ein zusätzliches graphisches Element, wie beispielsweise ein Haken hinzugefügt werden.

Es wird vorgeschlagen, dass die dritte Information einen Ist-Zustand der ersten Antriebsenergiequelle, wie beispielsweise einen Ladezustand der ersten Antriebsenergiequelle oder eine mit nur der ersten Antriebsenergiequelle maximal erreichbare Reichweite beschreibt. Der Ladezustand kann dabei eine Batterieanzeige umfassen, die beispielsweise den Füllgrad einer Batterie bzw. eines Ackumulators des Fahrzeugs anzeigt. Vorzugsweise wird der Ladezustand bildlich (nicht mit Text) darstellt. In diesem Zusammenhang kann der Ladezustand in mehreren, insbesondere fünf Stufen angezeigt werden. Die mit nur der ersten Antriebsenergiequelle maximal erreichbare Reichweite kann beispielsweise eine rein elektrische Reichweite betreffen. Die Reichweite kann beispielsweise als Text insbesondere in der oder im (unmittelbaren) Umfeld der bildlichen Darstellung des Ladezustandes eingeblendet werden.

Es wird vorgeschlagen, dass auf der Anzeige- und Bedieneinrichtung gleichzeitig weiterhin mindestens ein Mittel zur Beeinflussung zumindest eines Teils der dritten Information durch einen Benutzer dargestellt wird. Das Mittel ist vorzugsweise im (unmittelbaren) Umfeld der dritten Information dargestellt und/oder in die dritte Information integriert. Dies erlaubt in vorteilhafter Weise, dass die Beeinflussung der dritten Information durch den Benutzer weitestgehend intuitiv ist, was auch dazu beiträgt die Komplexität der Mensch-Maschine-Interaktion zu reduzieren. Die Beeinflussung umfasst insbesondere eine Konfiguration der dritten Information.

Insbesondere ist über das mindestens eine Mittel der Ladestand der ersten Antriebsenergiequelle konfigurierbar. Das Mittel kann beispielweise benutzer-selektierbare Tasten umfassen. Es kann beispielsweise eine Taste zum Erhöhen eines "Wunsch-SOC" vorgesehen sein. SOC steht hierbei für den State of Charge, also den Ladestand der ersten Antriebsenergiequelle. Bei dem "Wunsch-SOC" kann es sich zudem um einen möglichen (unten näher erläuterten) Soll-Zustand handeln. Weiterhin kann auch eine Taste zum Reduzieren des "Wunsch-SOC" vorgesehen sein. Darüber hinaus kann eine Taste zum Halten eines "Ist-SOC" vorgesehen sein.

Es wäre auch möglich, anstatt den Ladezustand einstellbar zu machen, die gewünschte rein elektrische Reichweite einstellbar zu machen. Aufgrund der Fahrstilabhängigkeit der Reichweite kann mit einer Einstellung des Ladezustandes aber in der Regel eine höhere Genauigkeit und Verlässlichkeit für den Benutzer erzielt werden.

In diesem Zusammenhang ist es besonders vorteilhaft, wenn das mindestens eine Mittel bedarfsweise zumindest eingeblendet oder ausgeblendet werden kann. Dies kann in vorteilhafter Weise dazu beitragen die Komplexität der Mensch-Maschine-Interaktion grundsätzlich weitestgehend zu vereinfachen und nur bei Bedarf deren Komplexität zu erhöhen.

In diesem Zusammenhang ist es auch weiterhin vorteilhaft, wenn mit dem mindestens einen Mittel ein Soll-Zustand der ersten Antriebsenergiequelle vorgegeben werden kann, der als ein Teil der dritten Information angezeigt wird. Die Vorgabe des Soll-Zustands kann beispielsweise über die oben beschriebenen Tasten erfolgen. Dass der Soll-Zustand (gleichzeitig) als ein Teil der dritten Information angezeigt wird erlaubt in vorteilhafter Weise, dass die Bedienung für den Benutzer weitestgehend intuitiv ist, was auch dazu beiträgt die Komplexität der Mensch-Maschine-Interaktion zu reduzieren. Der Soll-Zustand kann beispielsweise im (unmittelbaren) Umfeld des Ist-Zustands eingeblendet werden. Vorzugsweise handelt es sich bei dem Soll-Zustand um einen Soll-Ladezustand der ersten Antriebsenergiequelle oder eine mit nur der ersten Antriebsenergiequelle maximal erreichbare Soll-Reichweite.

Darüber hinaus ist es in diesem Zusammenhang vorteilhaft, wenn auf eine Betätigung des Mittels durch einen Benutzer hin ein dritter Betriebsmodus aktiviert wird und die zweite Information sich so ändert, dass sie die Aktivierung des dritten Betriebsmodus anzeigt. Bei dem dritten Betriebsmodus handelt es sich vorzugsweise um einen manuellen Modus, der ggf. ein Unterfall des Hybridmodus sein kann.

Darüber hinaus kann die momentane Betriebsstrategie des Fahrzeugs in Abhängigkeit des aktivierten Betriebsmodus und/oder in Abhängigkeit des vom Benutzer vorgebbaren Soll-Zustands ermittelt und eingestellt werden. Die Betriebsstrategie kann in diesem Zusammenhang beispielsweise ein Laden während der Fahrt sein, wenn der Soll-Ladezustand größer ist als der Ist-Ladezustand. Die ermittelte und eingestellte Betriebsstrategie kann ebenfalls als ein Teil der dritten Information dem Benutzer angezeigt werden. In diesem Zusammenhang kann beispielsweise im (unmittelbaren) Umfeld des Ist-Zustands eine Information (vorzugsweise in Textform) über die momentane Betriebsstrategie des Fahrzeugs dargestellt werden.

Hier auch beschrieben werden soll ein Computerprogramm zur Durchführung eines hier beschriebenen Verfahrens. Dies betrifft mit anderen Worten insbesondere ein Computerprogramm (-produkt), umfassend Befehle, die bei der Ausführung des Programms durch einen Computer diesen veranlassen, ein hier beschriebenes Verfahren auszuführen.

Ferner soll auch ein maschinenlesbares Speichermedium beschrieben werden, auf dem das Computerprogramm gespeichert ist. Regelmäßig handelt es sich bei dem maschinenlesbaren Speichermedium um einen computerlesbaren Datenträger.

Nach einem weiteren vorteilhaften Aspekt soll auch eine Vorrichtung zur Steuerung der Betriebsstrategie eines Fahrzeugs beschrieben werden, wobei die Vorrichtung zur Durchführung eines hier beschriebenen Verfahrens vorgesehen und eingerichtet ist. Beispielsweise kann das zuvor beschriebene Speichermedium Bestandteil der Vorrichtung oder mit dieser verbunden sein. Die Vorrichtung kann beispielsweise eine Anzeige- und Bedieneinrichtung umfassen, die zur Durchführung zumindest eines Teils eines hier beschriebenen Verfahrens vorgesehen und eingerichtet ist.

Die im Zusammenhang mit dem Verfahren erörterten Details, Merkmale und vorteilhaften Ausgestaltungen können entsprechend auch bei dem hier vorgestellten Computerprogram, dem Speichermedium und/oder der Vorrichtung auftreten und umgekehrt. Insoweit wird auf die dortigen Ausführungen zur näheren Charakterisierung der Merkmale vollumfänglich Bezug genommen.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1:: eine Anzeige- und Bedieneinrichtung, auf der ein Beispiel für ein hier beschriebenes Verfahren durchgeführt wird,
- Fig. 2:: eine Anzeige- und Bedieneinrichtung, auf der ein weiteres Beispiel für ein hier beschriebenes Verfahren durchgeführt wird,
- Fig. 3:: eine Anzeige- und Bedieneinrichtung, auf der ein weiteres Beispiel für ein hier beschriebenes Verfahren durchgeführt wird,
- Fig. 4a,b:: eine Anzeige- und Bedieneinrichtung, auf der ein weiteres Beispiel für ein hier beschriebenes Verfahren durchgeführt wird,
- Fig. 5a,b:: eine Anzeige- und Bedieneinrichtung, auf der ein weiteres Beispiel für ein hier beschriebenes Verfahren durchgeführt wird, und
- Fig. 6a,b:: eine Anzeige- und Bedieneinrichtung, auf der ein weiteres Beispiel für ein hier beschriebenes Verfahren durchgeführt wird.

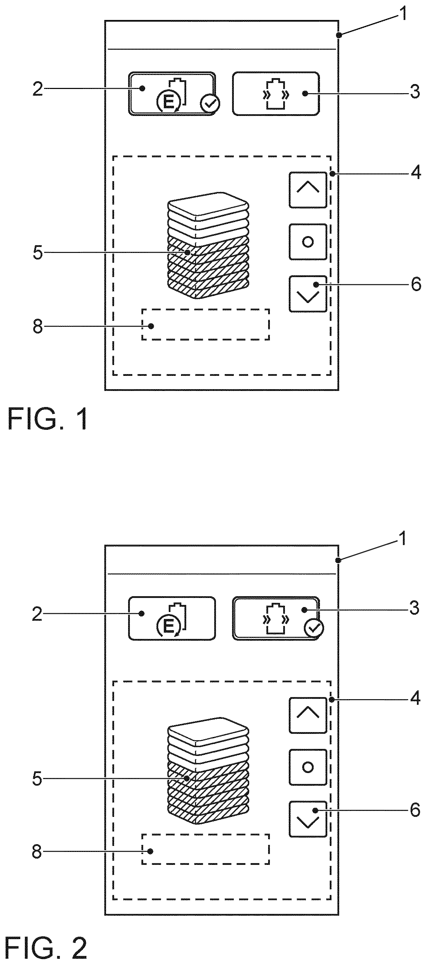

Fig. 1 zeigt schematisch eine Anzeige- und Bedieneinrichtung 1, auf der ein Beispiel für ein hier beschriebenes Verfahren durchgeführt wird. Es wird eine interaktive Darstellung des momentanen Betriebsmodus eines Fahrzeugs mit unterschiedlichen Antriebsenergiequellen auf der Anzeige- und Bedieneinrichtung 1 bereitgestellt. Dabei wird folgendes auf der Anzeige- und Bedieneinrichtung 1 gleichzeitig dargestellt:
Es wird eine benutzer-selektierbare erste Information 2 über die Aktivierung oder Deaktivierung eines ersten Betriebsmodus, in dem das Fahrzeug mit nur einer ersten der unterschiedlichen Antriebsenergiequellen betrieben werden kann, dargestellt. Zudem wird eine benutzer-selektierbare zweite Information 3 über die Aktivierung oder Deaktivierung eines zweiten Betriebsmodus, in dem das Fahrzeug mit mindestens einer ersten und einer zweiten der unterschiedlichen Antriebsenergiequellen betrieben werden kann, dargestellt. Zudem wird eine dritte Information 4 über einen Zustand zumindest der ersten der unterschiedlichen Antriebsenergiequellen dargestellt.

Die benutzer-selektierbare erste Information 2 und die benutzer-selektierbare zweite Information 3 werden hier in Form von Schalflächen dargestellt, die über eine Berührung der Anzeige- und Bedieneinrichtung 1 durch einen Benutzer im Bereich der betreffenden Schaltfläche selektiert werden können. Entsprechende Schaltflächen können allgemein auch als "Soft-Key-Tasten" oder kurz "Softkeys" bezeichnet werden.

Auf eine Selektion der ersten Information 2 durch einen Benutzer hin wird der erste Betriebsmodus aktiviert. In Fig. 1 ist in diesem Zusammenhang beispielhaft veranschaulicht, dass und wie die erste Information 2 sich so ändern kann, dass sie die Aktivierung des ersten Betriebsmodus anzeigt. Beispielhaft erscheint hierzu in der Ecke rechts unten der entsprechenden Schaltfläche ein Haken. Beispielsweise beschreibt die dritte Information 4 einen Ist-Zustand 5 der ersten Antriebsenergiequelle. Die erste Antriebsenergiequelle ist hier beispielhaft eine Batterie, die Energie für einen Elektroantrieb des Fahrzeugs bereitstellt. Bei dem Ist-Zustand 5 handelt es sich hier beispielsweise um einen Ladezustand der ersten Antriebsenergiequelle. Alternativ oder kumulativ zu dem Ladezustand kann eine mit nur der ersten Antriebsenergiequelle maximal erreichbare Reichweite als Ist-Zustand angezeigt werden.

Die dritte Information 4 kann neben einer Information über den Ist-Zustand 5 der ersten Antriebsenergiequelle auch eine Information über eine momentane Betriebsstrategie 8 des Fahrzeugs umfassen bzw. bereitstellen. In diesem Zusammenhang wird die Information über den Ist-Zustand 5 der ersten Antriebsenergiequelle als Bestandteil der dritten Information 4 in der Regel bildlich dargestellt, wie etwa über die in den Figuren 1 bis 6 beispielhaft gezeigte bildliche Darstellung des Ladezustands. Gleichzeitig kann die Information über eine momentane Betriebsstrategie 8 des Fahrzeugs als Bestandteil der dritten Information 4 in Textform dargestellt werden. Dabei wird in der Regel die Information über die momentane Betriebsstrategie 8 im Bereich der Information über den Ist-Zustand 5 dargestellt, beispielsweise direkt daneben und/oder direkt unterhalb.

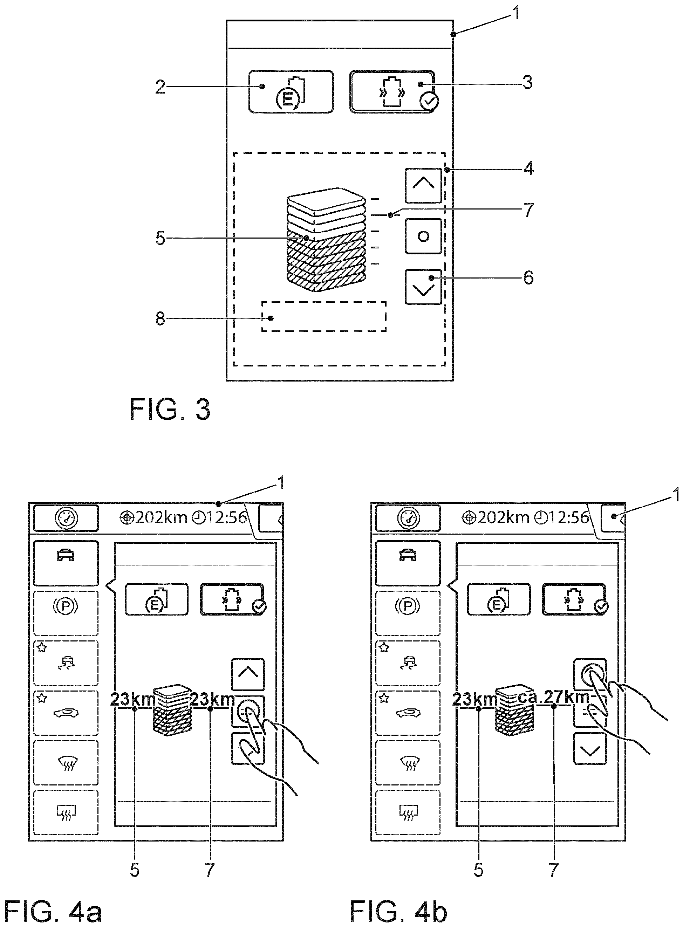

Mögliche textuelle Anzeigen zur Betriebsstrategie 8 können beispielsweise wie folgt lauten: "rein elektrisch fahren", "beide Antriebe (optimal) nutzen", "Ladestand halten" "während der Fahrt laden", "Batterie laden", "Batterie laden, (Batteriereichweite) voraussichtlich ca. 35 km", und/oder "Ladestand reservieren, (Batteriereichweite) voraussichtlich ca. 18 km". Dies sind natürlich lediglich Beispiele für textuelle Beschreibungen der momentanen Betriebsstrategie 8. Alternativ oder kumulativ kann zu den jeweils aktiven Modi eine Kurzbeschreibung des Modus (ebenfalls) angezeigt werden. Diese Texte können in dem in den Fig. 1 und 2 mit dem Bezugszeichen 8 markierten Textfeld eingeblendet werden. Darüber hinaus wird die Information über die momentane Betriebsstrategie 8 des Fahrzeugs bzw. die momentane Betriebsstrategie (selbst) in Abhängigkeit des aktivierten Betriebsmodus und/oder in Abhängigkeit eines weiter unten im Zusammenhang mit der Fig. 3 erläuterten, vom Benutzer vorgebbaren Soll-Zustands ermittelt und eingestellt.

Weiterhin ist in Fig. 1 beispielhaft veranschaulicht, dass auf der Anzeige- und Bedieneinrichtung 1 gleichzeitig weiterhin mindestens ein Mittel 6 zur Beeinflussung zumindest eines Teils der dritten Information 4 durch einen Benutzer dargestellt werden kann. Das Mittel 6 ist hier beispielsweise mit drei Schaltflächen gebildet, die jeweils über eine Berührung der Anzeige- und Bedieneinrichtung 1 durch einen Benutzer im Bereich der betreffenden Schaltfläche selektiert werden können.

Fig. 2 zeigt schematisch eine Anzeige- und Bedieneinrichtung 1, auf der ein weiteres Beispiel für ein hier beschriebenes Verfahren durchgeführt wird. Die Bezugszeichen werden einheitlich verwendet, sodass auf die vorhergehenden Ausführungen, insbesondere zur Fig. 1, Bezug genommen werden kann.

Auf eine Selektion der zweiten Information 3 durch einen Benutzer hin wird der zweite Betriebsmodus aktiviert. In Fig. 2 ist in diesem Zusammenhang beispielhaft veranschaulicht, dass und wie die zweite Information 3 sich so ändern kann, dass sie die Aktivierung des zweiten Betriebsmodus anzeigt. Beispielhaft erscheint hierzu in der Ecke rechts unten der entsprechenden Schaltfläche ein Haken.

Die Anzeige stellt somit in erster Linie insbesondere eine Wahl zwischen erstem Betriebsmodus (E-Mode) und zweiten Betriebsmodus (Hybrid) dar. Weniger offensichtlich wird auch ein "Manuell"-Ex-pertenmodus dargestellt. Die Aktivierung dieses Modus wird nachfolgend im Zusammenhang mit der Fig. 3 näher erläutert. Insbesondere kann dieser "Manuell"-Expertenmodus einen dritten Betriebsmodus und/oder einen Sonderfall bzw. Unterfall des zweiten Betriebsmodus (Hybrid) darstellen.

Fig. 3 zeigt schematisch eine Anzeige- und Bedieneinrichtung 1, auf der ein weiteres Beispiel für ein hier beschriebenes Verfahren durchgeführt wird. Die Bezugszeichen werden einheitlich verwendet, sodass auf die vorhergehenden Ausführungen Bezug genommen werden kann.

Auf eine Betätigung des Mittels 6 durch einen Benutzer hin kann ein dritter Betriebsmodus aktiviert werden. Dieser betrifft hier beispielhaft einen "Manuell"-Expertenmodus. In Fig. 2 ist in diesem Zusammenhang beispielhaft veranschaulicht, dass und wie die zweite Information 3 sich so ändern kann, dass sie die Aktivierung des dritten Betriebsmodus anzeigt. Beispielhaft wird hierzu der in der Ecke rechts unten der entsprechenden Schaltfläche dargestellte Haken in einer anderen Farbe dargestellt als bei Aktivierung des zweiten Betriebsmodus. In diesem möglichen Umsetzungsbeispiel ist das durch das Ausgrauen des Hakens an dem Softkey erkennbar. Dass der dritte Betriebsmodus über die zweite Information 3 angezeigt wird, verdeutlicht auch, dass der dritte Betriebsmodus vorzugsweise ein Sonderfall bzw. Unterfall des zweiten Betriebsmodus (Hybrid) ist.

Mit dem mindestens einen Mittel 6 kann ein Soll-Zustand 7 der ersten Antriebsenergiequelle durch einen Benutzer vorgegeben werden. Dieser Soll-Zustand 7 wird hier beispielsweise ebenfalls als ein Teil der dritten Information 4 angezeigt. Wenn auf eine Betätigung des Mittels 6 durch einen Benutzer hin der dritte Betriebsmodus ("Manuell"-Expertenmodus) aktiviert wird, kann innerhalb dieses Modus mittels entsprechender Betätigung des Mittels 6 der Soll-Zustand 7 der ersten Antriebsenergiequelle durch den Benutzer (manuell) vorgegeben werden, zum Beispiel durch Betätigung von Pfeiltasten des dritten Mittels 6. Insbesondere durch diese manuelle Vorgabe unterscheidet sich der dritte Modus von dem zweiten Modus (Hybrid), in dem die Vorgabe in der Regel automatisch erfolgt.

In Abhängigkeit des vorgegebenen Soll-Zustands 7 bzw. einer möglichen (auszugleichenden) Differenz zwischen Ist-Zustand 5 und Soll-Zustand 7 kann eine momentane Betriebsstrategie des Fahrzeugs ermittelt und eingestellt werden. Der Soll-Zustand 7 betrifft hier beispielhaft einen Soll-Ladezustand. Er ist somit eine manuelle Sollwertvorgabe des Ladezustands der ersten Antriebsenergiequelle. Alternativ oder kumulativ zu dem Ladezustand kann eine mit nur der ersten Antriebsenergiequelle maximal erreichbare Reichweite (d.h. rein elektrische Reichweite) als Soll-Zustand vorgegeben werden.

Ein Wechsel von dem dritten Betriebsmodus (Manuell-Modus) (zurück) zum ersten Betriebsmodus (E-Mode) oder zum zweiten Betriebsmodus (Hybrid-Modus) wird in der Regel ausgelöst, in dem die entsprechende benutzer-selektierbare erste Information 2 bzw. zweite Information 3 selektiert, beispielsweise die E-Mode-Taste2 bzw. die Hybrid-Taste 3 betätigt wird. Die Soft-Key-Tasten können demnach insbesondere einen Betriebsmoduswechsel auslösen.

Der Benutzer kann somit in einem ersten Schritt eine "einfache Situation" erleben, in welcher er nur zwei Betriebsmodi (erster Betriebsmodus und zweiter Betriebsmodus) zur Auswahl hat: Einen E-Mode (so auch gekennzeichnet) und ein "Auto-Modus", der sich "Hybrid" nennt und dieser kann situativ sich unterschiedlich verhalten (auch unter Berücksichtigung des Fahrprofils: Normal, Eco, Sport oder weitere). Der angezeigte Ist-Zustand 5 (hier: Ladezustand) wird im ersten Schritt nur als eine weitere Information wahrgenommen, ohne Funktion. Diese Möglichkeiten sind für einen überwiegenden Teil der Benutzer hinreichend. Die hier gezeigten Ausführungsvarianten erlauben zudem den Vorteil, dass der geneigte Anwender mit relativ einfachen Handlungen (berühren des mindestens einen Mittels 6 und/oder des Auswahlelements 9) ein komplexeres Verhalten auslösen kann.

Die Figuren 4a und 4b zeigen schematisch eine Anzeige- und Bedieneinrichtung 1, auf der ein weiteres Beispiel für ein hier beschriebenes Verfahren durchgeführt wird. Die Bezugszeichen werden einheitlich verwendet, sodass auf die vorhergehenden Ausführungen Bezug genommen werden kann.

Hier ist beispielhaft veranschaulicht, dass in der dritten Information 4 kumulativ zu dem (Ist-)Ladezustand 5 auch eine mit nur der ersten Antriebsenergiequelle maximal erreichbare Reichweite als Ist-Zustand 5 dargestellt und als Soll-Zustand 7 dargestellt und vorgegeben werden kann. Dadurch, dass der Soll-Zustand 7 gleichzeitig als ein Teil der dritten Information 4 angezeigt wird kann die Bedienung für den Benutzer weiter vereinfacht werden, und gleichwohl eine hohe Flexibilität bei den Einstellmöglichkeiten bieten.

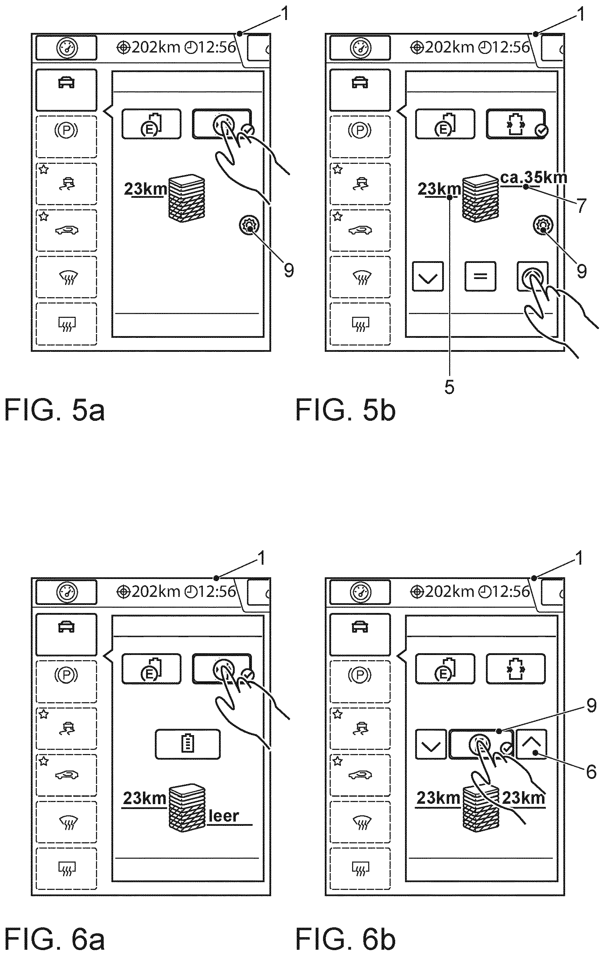

Die Figuren 5a und 5b zeigen schematisch eine Anzeige- und Bedieneinrichtung 1, auf der ein weiteres Beispiel für ein hier beschriebenes Verfahren durchgeführt wird. Die Bezugszeichen werden einheitlich verwendet, sodass auf die vorhergehenden Ausführungen Bezug genommen werden kann.

In Fig. 5 ist beispielhaft veranschaulicht, dass und wie das mindestens eine Mittel 6 bedarfsweise eingeblendet und ausgeblendet werden kann. Hierzu kann zum Beispiel ein benutzer-selektierbares Auswahlelement 9 auf der Anzeige- und Bedieneinrichtung 1 dargestellt werden, über dessen Selektion das mindestens eine Mittel 6 ein- und ausgeblendet werden kann.

Die Figuren 6a und 6b zeigen schematisch eine Anzeige- und Bedieneinrichtung 1, auf der ein weiteres Beispiel für ein hier beschriebenes Verfahren durchgeführt wird. Die Bezugszeichen werden einheitlich verwendet, sodass auf die vorhergehenden Ausführungen Bezug genommen werden kann.

In dem Beispiel nach Fig. 6 kann über das benutzer-selektierbares Auswahlelement 9 nicht nur das mindestens eine Mittel 6 bedarfsweise eingeblendet und ausgeblendet werden. Vielmehr kann über das benutzer-selektierbares Auswahlelement 9 gezielt der dritte Betriebsmodus eingeschaltet werden. Mit anderen Worten ausgedrückt kann auf eine Betätigung des benutzer-selektierbaren Auswahlelements 9 durch einen Benutzer hin der dritte Betriebsmodus aktiviert werden. Weiterhin kann das Auswahlelement 9 sich so ändern, dass es die Aktivierung des dritten Betriebsmodus anzeigt.

Das benutzer-selektierbare Auswahlelement 9 kann hier beispielsweise ebenfalls (wie die erste Information 2 und die zweite Information 3) in Form einer Schalfläche dargestellt werden, die über eine Berührung der Anzeige- und Bedieneinrichtung 1 durch einen Benutzer im Bereich der betreffenden Schaltfläche selektiert werden kann. In diesem Zusammenhang kann zur Anzeige der Aktivierung des dritten Betriebsmodus beispielsweise in der Ecke rechts unten der entsprechenden Schaltfläche ein Haken erscheinen.

Zusammenfassend können die gezeigten Ausführungsbeispiele weiterhin wie folgt beschrieben werden. Wenn beispielsweise ein entsprechendes Pop-Up in der Anzeige- und Bedieneinrichtung 1 schon geöffnet ist, dann gibt es in diesem Pop-Up folgende mögliche Soft-Keys 2, 3, 6, 9 zur Wahl: erster Betriebsmodus (E-Mode: Wenn dieser Betriebsmodus aktiv ist, dann wird die erste Information 2 (Taste 2) hervorgehoben. Wenn der E-Mode gesperrt ist, dann wird das entsprechend angezeigt (z.B. durch eine Durchstreichung der ersten Information/Taste 2)); zweiter Betriebsmodus (Hybrid: wenn dieser Betriebsmodus aktiv ist, dann wird die zweite Information 3 (Taste 3) hervorgehoben. Wenn der Hybrid-Mode gesperrt ist (der immer zusammen mit dem Manuell-Modus gesperrt ist), dann wird das entsprechend angezeigt (z.B. durch eine Durchstreichung der zweiten Information/Taste 3); dritter Betriebsmodus ("Manuell"-Expertenmodus) (als Unterfalls des Hybrid-Modus): Der "Manuell"-Expertenmodus ist für den Benutzer eine Variante des Hybrid-Modus. Deswegen wird die zweite Information/Hybrid-Taste 3 auch im "Manuell"-Expertenmodus hervorgehoben, allerdings optisch angepasst, damit hervorgeht, dass der "Manuell"-Expertenmodus aktiv ist).

Bei den gezeigten Ausführungsbeispielen können insbesondere folgende Anwendungsfälle auftreten: Wechsel von E-Mode in Hybrid mit Soft-Key 3: E-Mode ist aktiv, Hybrid-Soft-Key 3 wird betätigt, Hybrid ist aktiv; Wechsel von E-Mode in Manuell mit Soft-Key 6: E-Mode ist aktiv, eine Einstellmöglichkeit (Mittel 6) wird betätigt (zum Beispiel: "Wunsch-SOC erhöhen", "Ist-Kunden-SOC" halten oder "Wunsch-SOC reduzieren"), Manuell ist aktiv; Wechsel von Hybrid in E-Mode mit Soft-Key 2: Hybrid ist aktiv, E-Mode-Soft-Key 2 wird betätigt, E-Mode ist aktiv; Wechsel von Hybrid in Manuell mit Soft-Key 6: Hybrid ist aktiv, Eine Einstellmöglichkeit 6 wird betätigt (zum Beispiel: "Wunsch-SOC erhöhen", "Ist-Kunden-SOC halten" oder "Wunsch-SOC reduzieren"), Manuell ist aktiv; Wechsel von Manuell in E-Mode mit Soft-Key 2: Manuell ist aktiv, E-Mode-Soft-Key 2 wird betätigt, E-Mode ist aktiv; Wechsel von Manuell in Hybrid mit Soft-Key 3: Manuell ist aktiv, Hybrid-Soft-Key 3 wird betätigt, Hybrid ist aktiv; E-Mode-Soft-Key-Betätigung in E-Mode: E-Mode ist aktiv, E-Mode-Soft-Key 2 wird betätigt, E-Mode bleibt aktiv; Hybrid-Soft-Key-Betätigung in Hybrid: Hybrid ist aktiv, Hybrid-Soft-Key 3 wird betätigt, Hybrid bleibt aktiv.

Eine vorzugsweise dauerhafte Anzeige ist die "Batterieanzeige" (bildliche Darstellung des Ist-Zustands 5 der ersten Antriebsenergiequelle als Bestandteil der dritten Information 4), die den Ist-SOC (State-of-Charge) anzeigt. Je nach Betriebsmodus können unterschiedliche Angaben und unterschiedliche Informationen an dieser Batterie angezeigt werden.

### Bezugszeichenliste

- 1: Anzeige- und Bedieneinrichtung
- 2: erste Information
- 3: zweite Information
- 4: dritte Information
- 5: Ist-Zustand
- 6: Mittel
- 7: Soll-Zustand
- 8: Betriebsstrategie
- 9: Auswahlelement

## Patentansprüche

1. Verfahren zum Bereitstellen einer interaktiven Darstellung des momentanen Betriebsmodus eines Fahrzeugs mit unterschiedlichen Antriebsenergiequellen, umfassend eine erste Antriebsenergiequelle ausgeführt als Akkumulator und eine zweite Antriebsenergiequelle ausgeführt als Tank zum Speichern von fossilem Brennstoff oder von Wasserstoff, auf einer Anzeige- und Bedieneinrichtung (1), wobei folgendes auf der Anzeige- und Bedieneinrichtung (1) gleichzeitig dargestellt wird:
- eine benutzer-selektierbare erste Information (2) in Form einer Schaltfläche über die Aktivierung oder Deaktivierung eines ersten Betriebsmodus, in dem das Fahrzeug mit nur der ersten Antriebsenergiequelle betrieben werden kann,
- eine benutzer-selektierbare zweite Information (3) in Form einer Schaltfläche über die Aktivierung oder Deaktivierung eines zweiten Betriebsmodus, in dem das Fahrzeug mit mindestens der ersten und der zweiten Antriebsenergiequelle betrieben werden kann,
- eine dritte Information (4) über einen Zustand zumindest der ersten der unterschiedlichen Antriebsenergiequellen,
wobei auf eine Selektion der ersten Information (2) durch einen Benutzer hin der erste Betriebsmodus aktiviert wird und die erste Information (2) sich so ändert, dass sie die Aktivierung des ersten Betriebsmodus anzeigt; wobei auf eine Selektion der zweiten Information (3) durch einen Benutzer hin der zweite Betriebsmodus aktiviert wird und die zweite Information (3) sich so ändert, dass sie die Aktivierung des zweiten Betriebsmodus anzeigt; wobei die dritte Information (4) einen Ist-Zustand (5) der ersten Antriebsenergiequelle, wie beispielsweise einen Ladezustand der ersten Antriebsenergiequelle oder eine mit nur der ersten Antriebsenergiequelle maximal erreichbare Reichweite beschreibt; wobei auf der Anzeige- und Bedieneinrichtung (1) gleichzeitig weiterhin mindestens ein Mittel (6) zur Beeinflussung zumindest eines Teils der dritten Information (4) durch einen Benutzer dargestellt wird; wobei mit dem mindestens einen Mittel (6) ein Soll-Zustand (7) der ersten Antriebsenergiequelle vorgegeben werden kann, der als ein Teil der dritten Information (4) angezeigt wird.

2. Verfahren nach Anspruch 1, wobei das mindestens eine Mittel (6) bedarfsweise zumindest eingeblendet oder ausgeblendet werden kann.

3. Verfahren nach einem der vorhergehenden Ansprüche, wobei auf eine Betätigung des Mittels (6) durch einen Benutzer hin ein dritter Betriebsmodus aktiviert wird und die zweite Information (3) sich so ändert, dass sie die Aktivierung des dritten Betriebsmodus anzeigt.

4. Computerprogramm zur Durchführung eines Verfahrens nach einem der vorhergehenden Ansprüche.

5. Maschinenlesbares Speichermedium, auf dem das Computerprogram nach Anspruch 4 gespeichert ist.

## Claims

1. Method for providing an interactive display of the current operating mode of a vehicle with different drive energy sources, comprising a first drive energy source designed as a storage battery and a second drive energy source designed as a tank for storing fossil fuel or hydrogen, on a display and operating device (1), the following being shown at the same time on the display and operating device (1):
- a user-selectable first item of information (2) in the form of a button relating to the activation or deactivation of a first operating mode, in which the vehicle can be operated with just a first drive energy source,
- a user-selectable second item of information (3) in the form of a button relating to the activation or deactivation of a second operating mode, in which the vehicle can be operated with at least the first and the second drive energy source,
- a third item of information (4) concerning a state of at least the first of the different drive energy sources,
wherein, in response to the first item of information (2) being selected by a user, the first operating mode is activated and the first item of information (2) is changed so as to indicate the activation of the first operating mode; wherein, in response to the second item of information (3) being selected by a user, the second operating mode is activated and the second item of information (3) is changed so as to indicate the activation of the second operating mode; wherein the third item of information (4) is an actual state (5) of the first drive energy source, such as for example a state of charge of the first drive energy source or a maximum achievable range with only the first drive energy source; wherein at least one means (6) for influencing at least part of the third item of information (4) by a user is also displayed at the same time on the display and operating device (1); wherein the at least one means (6) can be used to preselect a desired state (7) of the first drive energy source, which is indicated as part of the third item of information (4).

2. Method according to Claim 1, wherein the at least one means (6) can be at least shown or hidden, as required.

3. Method according to one of the preceding claims, wherein, in response to the means (6) being actuated by a user, a third operating mode is activated and the second item of information (3) is changed so as to indicate the activation of the third operating mode.

4. Computer program for carrying out a method according to one of the preceding claims.

5. Machine-readable storage medium on which the computer program according to Claim 4 is stored.

## Revendications

1. Procédé de fourniture d'une représentation interactive du mode de fonctionnement instantané d'un véhicule équipé de différentes sources d'énergie d'entraînement, comprenant une première source d'énergie d'entraînement conçue comme un accumulateur et une deuxième source d'énergie d'entraînement conçue comme un réservoir de stockage de carburant fossile ou d'hydrogène, sur un dispositif d'affichage et de commande (1), les éléments suivants étant représentés simultanément sur le dispositif d'affichage et de commande (1) :
- une première information (2) sélectionnable par l'utilisateur, se présentant sous la forme d'un bouton et relative à l'activation ou la désactivation d'un premier mode de fonctionnement dans lequel le véhicule peut être utilisé uniquement avec la première source d'énergie d'entraînement,
- une deuxième information (3) sélectionnable par l'utilisateur, se présentant sous la forme d'un bouton et relative à l'activation ou la désactivation d'un deuxième mode de fonctionnement dans lequel le véhicule peut être utilisé avec au moins la première et la deuxième source d'énergie d'entraînement,
- une troisième information (4) relative à un état d'au moins la première des différentes sources d'énergie d'entraînement,
lors d'une sélection de la première information (2) par un utilisateur, le premier mode de fonctionnement étant activé et la première information (2) étant modifiée de façon à indiquer l'activation du premier mode de fonctionnement ; lors d'une sélection de la deuxième information (3) par un utilisateur, le deuxième mode de fonctionnement est activé et la deuxième information (3) est modifiée de façon à indiquer l'activation du deuxième mode de fonctionnement ; la troisième information (4) décrivant un état réel (5) de la première source d'énergie d'entraînement, comme par exemple un état de charge de la première source d'énergie d'entraînement ou une autonomie maximale qui peut être atteinte uniquement avec la première source d'énergie d'entraînement ; au moins un moyen (6) permettant à un utilisateur d'influer sur au moins une partie de la troisième information (4) étant représenté simultanément sur le dispositif d'affichage et de commande (1) ; un état cible (7) de la première source d'énergie d'entraînement pouvant être spécifié avec l'au moins un moyen (6), lequel état cible est affiché comme partie de la troisième information (4).

2. Procédé selon la revendication 1, l'au moins un moyen (6) pouvant au moins être affiché ou masqué si nécessaire.

3. Procédé selon l'une des revendications précédentes, lors de l'actionnement du moyen (6) par un utilisateur, un troisième mode de fonctionnement étant activé et la deuxième information (3) étant modifiée de façon à indiquer l'activation du troisième mode de fonctionnement.

4. Programme informatique destiné à mettre en œuvre un procédé selon l'une des revendications précédentes.

5. Support de stockage lisible par machine sur lequel est stocké le programme informatique selon la revendication 4.
